# EUROPÄISCHE PATENTSCHRIFT

(11) **EP 1 758 943 B1**
(45) Veröffentlichungstag und Bekanntmachung des Hinweises auf die Patenterteilung: **16.07.2008**
(21) Anmeldenummer: 05746547.8
(22) Anmeldetag: 18.05.2005
(51) Int. Cl.: C08F 8/30, C08F 8/44, C08F 8/28, C08F 8/12, C08F 16/38, C09D 11/10, B32B 17/10, B01F 17/52, C09D 129/14, C23F 11/173, C04B 35/634, B22F 1/00

(54) **Verwendung von aminofunktionelle Polyvinylacetalen in Druckfarbenzusammensetzungen**
Use of aminofunctional polyvinylacetals in printing ink compositions
Utilisation de polyacétals de vinyle aminofonctionnels dans des compositions d'encre d'imprimerie

(30) Priorität: 01.06.2004 DE 102004026609
(43) Veröffentlichungstag der Anmeldung: 07.03.2007
(73) Patentinhaber: Wacker Polymer Systems GmbH & Co. KG, 84489 Burghausen (DE)
(72) Erfinder: STARK, Kurt, 91365 Weilersbach (DE)
(74) Vertreter: Schuderer, Michael
(86) Internationale Anmeldenummer: PCT/EP2005/005412
(87) Internationale Veröffentlichungsnummer: WO 2005/118653

(56) Entgegenhaltungen:
- EP-A- 1 284 274
- WO-A-98/13394
- FR-A- 1 145 722
- GB-A- 834 612
- US-A- 2 739 059
- US-A- 2 960 384
- US-A- 3 457 327

## Beschreibung

Die Erfindung betrifft die Verwendung von aminofunktionelle Polyvinylacetalen in Druckfarbenzusammensetzungen.

Die Herstellung von Polyvinylacetalen, die aus den entsprechenden Polyvinylalkoholen durch polymeranaloge Umsetzung mit den entsprechenden Aldehyden erhalten werden, ist bereits seit 1924 bekannt, wobei in der Folgezeit eine Vielzahl von Aldehyden zur Herstellung der entsprechenden Polyvinylacetale eingesetzt worden sind. Polyvinylacetale werden in einem 3-Stufenprozeß (Polyvinylacetat -> Polyvinylalkohol -> Polyvinylacetal) hergestellt, wobei Produkte resultieren, welche neben Vinylacetalgruppen noch Vinylalkohol- und Vinylacetat-Einheiten enthalten. Kommerzielle Bedeutung haben vor allem Polyvinylformal, Polyvinylacetacetal und Polyvinylbutyral (PVB) erlangt.

Der größte Anwendungsbereich für Polyvinylacetale ist die Herstellung von Sicherheitsgläsern im Automobilbau und in der Architektur, wobei weichgemachte Polyvinylbutyral-Folien als Zwischenschicht in Glasscheiben eingesetzt werden. Ein weiteres Einsatzgebiet für Polyvinylbutyrale ist die Verwendung in korrosionsschützenden Beschichtungen. Unter anderem aufgrund ihrer guten Pigment-Bindekraft werden Polyvinylbutyrale auch als Bindemittel in Lacken und speziell in Druckfarben eingesetzt. In dieser Anwendung wird die Anforderung gestellt, dass die organischen Lösungen der Polyvinylbutyrale möglichst niedrige Lösungsviskosität aufweisen sollen, um damit Farben mit hohem Feststoffgehalt bei möglichst hohem Bindemittelanteil herstellen zu können. Beispiele hierfür sind die modifizierten Polyvinylbutyrale mit niedriger Lösungsviskosität aus der DE-A 19641064, welche durch Acetalisierung eines Copolymeren mit Vinylalkohol- und 1-Alkyl-Vinylalkohol-Einheiten gewonnen werden.

Ein Nachteil, den alle im Stand der Technik beschriebenen Polyvinylacetale aufweisen, ist deren unzureichende Haftung auf speziellen Substraten. Aus diesem Grund ist die Zugabe von Haftvermittlern in vielen Fällen zwingend erforderlich. In der EP-B 0346768 wird beschrieben, Filme oder Folien mit aminofunktionellen Silanen, wie N-(2-Aminoethyl)-3-Aminopropyltrimethoxysilan, zu beschichten, um die Verbindung mit anderen Polymeren, insbesondere mit Polyvinylbutyralen, zu verbessern.

Die im Stand der Technik beschriebenen Verfahren zur Verbesserung der Haftung zwischen Polyvinylacetalen und kritischen Substraten durch Zugabe der bekannten Haftvermittler weisen merkliche Nachteile auf. So hält beispielsweise die haftvermittelnde Wirkung oft nicht lange genug an oder der Verbund wird mit der Zeit schwächer. Ein anderes Problem ist die Zugabe von den Haftvermittlern selbst. Dies bedeutet immer einen zusätzlichen, zeitaufwendigen Schritt bei der Rezeptierung. Des weiteren erfordert die Auswahl und die Zugabe geeigneter Haftvermittler viel Know-how, da beim Zugeben des Haftvermittlers zu einem Polyvinylacetal - beispielsweise in einem organischen Lösungsmittel - Unverträglichkeiten und Inhomogenitäten, die bis zur Phasenseparation reichen können, auftreten können. Überdies sind Nebenreaktionen der als Haftvermittler nachträglich zugegebenen reaktiven Silane nicht auszuschließen (Hydrolyse-, Kondensationsreaktionen). Ein weiterer Nachteil ist die große Menge an Haftvermittler, die meist zugesetzt werden muß, um eine merklich bessere Haftung von Polyvinylacetalen auf kritischen Substraten zu erzielen, so dass dieses Verfahren aufgrund des hohen Preises von Silanen sehr teuer werden kann.

Es bestand daher die Aufgabe, Druckfarbenzusammensetzungen solche Polyvinylbutyrale zuzusetzen, welche - für sich alleine - bereits eine sehr gute Haftung auf unterschiedlichen und insbesondere auf den bekannten kritischen Substraten bewirken, so dass auf die Zugabe von Haftvermittlern idealerweise gänzlich verzichtet werden kann.

Überraschenderweise wurde gefunden, dass durch Einsatz von Polyvinylacetalen, welche aus Polyvinylalkoholen durch polymeranaloge Umsetzung mit Aldehyden erhalten werden, wobei wenigstens ein Aldehyd, der auch als Hydrat, Halb- oder Vollacetal vorliegen kann, Amino- oder Ammoniumgruppen enthält, eine deutlich verbesserte Haftung auf kritischen Substraten erreicht wird, die sogar so weit reicht, dass auf Haftvermittler verzichtet werden kann. Des weiteren wird auch die Haftung auf Glas oder Metallen stark verbessert. Der haftungsverbessernde Effekt stellt sich dabei bei den modifizierten Polyvinylacetalen schon bei einem sehr niedrigen Gehalt an Amino- bzw. Ammoniumgruppen ein.

Die EP-A 617166 A1 betrifft die Verwendung von aminofunktionellem Polyvinylalkohol zur Verbesserung der Eigenschaften von Recyclingpapier. Als eine Alternative zur Herstellung wird die Umsetzung von Polyvinylalkohol mit Aminoaldehyddialkylacetal angegeben. Das Produkt enthält dabei neben den Vinylalkohol-einheiten als Vinylacetaleinheiten nur Aminoacetalgruppen. Ein solches Produkt ist auch aus der WO 02/072361 A1 bekannt, in der aminofunktionelle Polyvinylalkohole als Bindemittel für Inkjetpapier beschrieben werden. In der EP 552702 A1 wird die Verwendung von Vinylamin-Vinylalkohol-Mischpolymerisaten, welche gegebenenfalls acetalisiert sein können, bei der Papierherstellung beschrieben. Bei den darin genannten Produkten ist die Amingruppe direkt an die Polymerkette geknüpft. Gleichartige Produkte, das heißt Vinylamin-Vinylalkohol-Mischpolymere, welche gegebenenfalls noch Ester-, Amid- und/oder Acetal-Gruppen tragen, werden in der EP 461399 A2 beschrieben. Die US 2960384 betrifft die Aminoacetalisierung von geformten Polyvinylalkohol-Strukturen, insbesondere von Polyvinylalkohol-Fasern. Die FR 1145722 betrifft die Herstellung von Polyvinylalkoholfasern, wobei dazu neben Polyvinylalkohol auch teilweise aminoacetalisierter Polyvinylalkohol versponnen wird. Die US 3457327 beschreibt die Verwendung von aminoacetalisiertem Polyvinylalkohol zur Verbesserung der Lichtbeständigkeit von Polyurethan-Formmassen. In der US 2739059 werden aminoacetalisierte Polyvinylalkohole als Gelatine-Ersatz in Photobeschichtungen eingesetzt. Die GB 834612 betrifft die Verbesserung der Fasereigenschaften von Polyvinylalkohol-Fasern mittels Aminoacetalisierung. Die WO-A 98/13394 beschreibt die Verwendung von wasserlöslichen Polymeren, wie beispielsweise aminoacetalisierte Polyvinylalkohole, für temporäre Schutzbeschichtungen für photographische Materialien wie Druckplatten, insbesondere lithographische Platten. Die EP-A 1284274 beschreibt, dass niedermolekulare Polyvinylacetale mit definierter Lösungsviskosität besser auf Substraten, wie beispielsweise flexiblen Folien, haften als herkömmliche Polyvinylacetale.

Gegenstand der Erfindung ist die Verwendung von mit Amino- oder Ammoniumgruppen modifizierten Polyvinylacetalen mit einer Viskosität von 4 mPas bis 1200 mPas (DIN 53015; Methode nach Höppler, 10 %-ige Lösung in Ethanol), erhältlich durch Acetalisierung von teilverseiften oder vollverseiften Vinylester-Polymerisaten mit ≥ 50 Mol-% Vinylalkohol-Einheiten und einer Viskosität von 1 bis 40 mPas (DIN 53015, Methode nach Höppler; 4 %-ige Lösung in Wasser) mit einem oder mehreren aliphatischen Aldehyden ausgewählt aus der Gruppe umfassend Aldehyde mit 1 bis 15 C-Atomen sowie deren Halbacetale und Vollacetale, und mindestens einem Amino- oder Ammoniumgruppen enthaltenden Aldehyd oder dessen Hydrat, Halbacetal oder Vollacetal, in Druckfarbenzusammensetzungen.

Geeignete teilverseifte oder vollverseifte Vinylester-Polymerisate leiten sich von Polymerisaten ab, welche 50 bis 100 Mol-% Vinylester-Einheiten enthalten. Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 15 C-Atomen, beispielsweise VeoVa9^{R} oder VeoVa10^{R} (Handelsnamen der Firma Resolutions). Besonders bevorzugt ist Vinylacetat.

Neben den Vinylester-Einheiten können gegebenenfalls noch ein oder mehrere Monomere aus der Gruppe umfassend Methacrylsäureester und Acrylsäureester von Alkoholen mit 1 bis 15 C-Atomen, Olefine, Diene, Vinylaromaten und Vinylhalogenide copolymerisiert sein. Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat. Geeignete Diene sind 1,3-Butadien und Isopren. Beispiele für polymerisierbare Olefine sind Ethen und Propen. Als Vinylaromaten können Styrol und Vinyltoluol einpolymerisiert werden. Aus der Gruppe der Vinylhalogenide werden üblicherweise Vinylchlorid, Vinylidenchlorid oder Vinylfluorid, vorzugsweise Vinylchlorid, eingesetzt. Der Anteil dieser Comonomere wird so bemessen, dass der Anteil an Vinylestermonomer ≥ 50 Mol-% im Vinylester-Polymerisat beträgt.

Gegebenenfalls können noch weitere Comonomere in einem Anteil von vorzugsweise 0.01 bis 20 Gew.-%, bezogen auf das Gesamtgewicht des Vinylester-Polymerisats enthalten sein. Beispiele hierfür sind ethylenisch ungesättigte Mono- und Dicarbonsäuren, vorzugsweise Crotonsäure, Acrylsäure, Methacrylsäure, Fumarsäure und Maleinsäure; ethylenisch ungesättigte Carbonsäureamide und -nitrile, vorzugsweise N-Vinylformamid, Acrylamid und Acrylnitril; auch cyclische Amide, die am Stickstoff eine ungesättigte Gruppe tragen, wie N-Vinylpyrrolidon; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Als Hilfsmonomere geeignet sind auch kationische Monomere wie Diallyldimethylammoniumchlorid (DADMAC), 3-Trimethylammoniumpropyl-(meth)acrylamidchlorid (MAPTAC) und 2-Trimethylammonium-ethyl(meth)acrylatchlorid. Ferner sind als Hilfsmonomere geeignet Vinylether, Vinylketone, weitere vinylaromatische Verbindungen, die auch Heteroatome besitzen können.

Geeignete Hilfsmonomere sind auch polymerisierbare Silane bzw. Merkaptosilane. Bevorzugt sind γ-Acryl- bzw. γ-Methacryloxypropyltri(alkoxy)silane, α-Methacryloxymethyltri(alkoxy)silane, γ-Methacryloxypropyl-methyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele hierfür sind Vinyltrimethoxysilan, Vinyltriethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, 3-(Triethoxysilyl)propylbernsteinsäure-anhydridsilan. Bevorzugt werden auch 3-Mercaptopropyltriethoxysilan, 3-Mercaptopropyltrimethoxysilan und 3-Mercaptopropylmethyldimethoxysilan.

Weitere Beispiele sind funktionalisierte (Meth)acrylate, insbesondere Epoxy-funktionelle wie Glycidylacrylat, Glycidylmethacrylat, Allylglycidether, Vinylglycidether, oder Hydroxyalkyl-funktionelle wie Hydroxyethyl(meth)acrylat, oder substituierte oder unsubstituierte Aminoalkyl(meth)acrylate.

Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Diese Vinylester-Polymerisate sind im Handel erhältlich oder können in bekannter Weise mittels Polymerisation hergestellt werden; vorzugsweise durch Substanzpolymerisation, Suspensionspolymerisation oder durch Polymerisation in organischen Lösungsmitteln, besonders bevorzugt in alkoholischer Lösung. Geeignete Lösungsmittel und Regler sind beispielsweise Methanol, Ethanol, Propanol, Isopropanol. Die Polymerisation wird unter Rückfluß bei einer Temperatur von 40°C bis 100°C durchgeführt und durch Zugabe gängiger Initiatoren radikalisch initiiert. Beispiele für gängige Initiatoren sind Azoinitiatoren, oder Percarbonate wie Cyclohexylperoxidicarbonat, oder Perester wie t-Butylperneodecanoat oder t-Butylperpivalat, sowie Peroxide wie t-Butylhydroperoxid. Die Einstellung des Molekulargewichts kann in bekannter Weise durch Zugabe von Regler, durch den Lösungsmittelgehalt, durch Variation der Initiatorkonzentration und durch Variation der Temperatur erfolgen. Nach Abschluß der Polymerisation wird das Lösungsmittel sowie gegebenenfalls überschüssiges Monomer und Regler abdestilliert.

Die Verseifung der Vinylester-Polymerisate erfolgt in an sich bekannter Weise, zum Beispiel nach dem Band- oder Kneterverfahren, im Alkalischen oder Sauren unter Zugabe von Säure oder Base. Vorzugsweise wird das Vinylester-Festharz in Alkohol, beispielweise Methanol, unter Einstellen eines Feststoffgehalts von 10 bis 80 Gew.-% aufgenommen. Bevorzugt wird die Hydrolyse im Basischen durchgeführt, beispielsweise durch Zugabe von NaOH, KOH oder NaOCH₃. Die Base wird im allgemeinen in einer Menge von 1 bis 5 Mol-% pro Mol Ester-Einheiten eingesetzt. Die Hydrolyse wird bei Temperaturen von 25°C bis 80°C durchgeführt. Nach Abschluß der Hydrolyse wird das Lösungsmittel abdestilliert und der Polyvinylalkohol wird als Pulver erhalten. Der Polyvinylalkohol kann aber auch durch eine sukzessive Zugabe von Wasser, während das Lösungsmittel abdestilliert wird, als wässrige Lösung gewonnen werden.

Als vollverseifte Vinylester-Polymerisate bezeichnet man dabei solche Polymerisate, deren Hydrolysegrad ≥ 96 Mol-% ist. Als teilverseifte Polyvinylester sind solche zu verstehen, mit einem Hydrolysegrad ≥ 50 Mol-% und < 96 Mol-%. Die teil- oder vollverseiften Vinylesterpolymerisate haben vorzugsweise einen Hydrolysegrad von 50 Mol-% bis 99.9 Mol-%, besonders bevorzugt von 70 Mol-% bis 99.9 Mol-%, am meisten bevorzugt von 96 Mol-% bis 99.9 Mol-%. Die Viskosität des Polyvinylalkohols (DIN 53015, Methode nach Höppler; 4 %-ige Lösung in Wasser) beträgt 1 bis 40 mPas, vorzugsweise 1 bis 6 mPas, und dient als Maß für das Molekulargewicht und für den Polymerisationsgrad der teil- oder vollverseiften Vinylesterpolymerisate. Der Polymerisationsgrad des eingesetzten Polyvinylalkohols ist mindestens 130.

Bevorzugte Aldehyde, sowie deren Hydrate, Halb- bzw. Vollacetale, die Amino- oder Ammoniumgruppen enthalten, können durch folgende Strukturformeln I bis IV angegeben werden:
I) (R)₂N - (CH₂)ₙ - CH(OR)₂, ein Vollacetal, ein Halbacetal oder ein Aldehyd-Hydrat eines neutralen Aminoaldehyds,
II) (R)₂N - (CH₂)ₙ - CH=O, ein freier, neutraler Aminoaldehyd,
III) X⁻ (R)₃N⁺ - (CH₂)ₙ - CH(OR)₂, ein Vollacetal, ein Halbacetal oder ein Aldehyd-Hydrat eines kationischen Ammoniumaldehyds,
IV) X⁻ (R)₃N⁺ - (CH₂)ₙ - CH=O, ein freier, kationischer Ammoniumaldehyd,
wobei jeweils R gleich oder verschieden ist und die Bedeutung H-Atom haben kann und für einen unverzweigten oder verzweigten, gesättigten oder ungesättigten, gegebenenfalls substituierten Alkylrest mit 1 bis 12 C-Atomen stehen kann, der gegebenenfalls durch Heteroatome des Typs N, O, S unterbrochen sein kann. X⁻ steht für ein Anion, wobei X ein Halogen wie F, Cl, Br oder I sein kann oder für einen Rest einer anorganischen oder organischen Säure, wie z.B. Phosphat, Hydrogenphosphat, Dihydrogenphosphat, Phosphit, Chlorat, Nitrat, Nitrit, Sulfat, Hydrogensulfat, Sulfit, Hydrogensulfit, Acetat, Carbonat, Hydrogencarbonat steht. n steht für eine Zahl von 0 bis 40, vorzugsweise von 1 bis 10.

Bevorzugte Aldehyde oder deren Halb- bzw. Vollacetale nach den Strukturformeln I bis IV sind Formamid, Aminoacetaldehyddimethylacetal, Aminoacetaldehyddiethylacetal, Aminopropionaldehyddimethylacetal, Aminopropionaldehyddiethylacetal, Aminobutyraldehyddimethylacetal, Aminobutyraldehyddiethylacetal sowie deren kationischen Ammoniumsalze.

Besonders bevorzugt sind Aminoacetaldehyddimethylacetal, Aminopropionaldehyddimethylacetal und Aminobutyraldehyddimethylacetal, oder entsprechend deren kationischen Ammoniumsalze. Die Amino- bzw. Ammoniumgruppen enthaltenden Aldehyde oder deren Hydrate, Halb- und Vollacetale nach den Strukturformeln I bis IV werden in Mischungen mit einem oder mehreren unsubstituierten, aliphatischen Aldehyden, insbesondere Butyr- oder Acetaldehyd, eingesetzt, um ein modifiziertes Polyvinylacetal mit Amino- bzw. Ammoniumgruppen zu erhalten.

Geeignete unsubstituierte, aliphatische und Amino- bzw. Ammoniumgruppenfreie Aldehyde sind solche aus der Gruppe umfassend aliphatische Aldehyde mit 1 bis 15 C-Atomen, sowie deren Halbacetale und Vollacetale. Bevorzugt werden Formaldehyd, Acetaldehyd, Propionaldehyd, Butyraldehyd. Besonders bevorzugt sind Butyraldehyd oder eine Mischung aus Butyraldehyd und Acetaldehyd.

Die mit Amino- bzw. Ammoniumgruppen modifizierten Polyvinylbutyrale haben einen Stickstoff-Gehalt (ermittelt nach Kjeldahl) von 0.001 bis 5 Gew.-%, bevorzugt 0.005 bis 2 Gew.-%, besonders bevorzugt 0.01 bis 1 Gew.-% und am meisten bevorzugt 0.02 bis 0.9 Gew.-%, bezogen auf das Gesamtgewicht des mit Amino- bzw. Ammoniumgruppen modifizierten Polyvinylacetals.

Der Acetalisierungsgrad der mit Amino- bzw. Ammoniumgruppen modifizierten Polyvinylacetale beträgt 1 bis 80 Mol-%, in den bevorzugten Bereichen 1 bis 25 Mol-% und 40 bis 80 Mol-%. Der Gehalt an Amino- bzw. Ammonium-Acetaleinheiten bezogen auf den Gesamtgehalt an Acetaleinheiten beträgt 0.001 bis 95 %, bevorzugt 0.005 bis 50 %, besonders bevorzugt 0.01 bis 30 %, jeweils bezogen auf den Gesamtgehalt an Acetaleinheiten in Mol-%. Die Viskosität der modifizierten Polyvinylacetale (DIN 53015; Methode nach Höppler, 10 %-ige Lösung in Ethanol) beträgt 4 mPas bis 1200 mPas, vorzugsweise 4 bis 120 mPas.

Wässrige Suspensionen der mit Amino- bzw. Ammoniumgruppen modifizierten Polyvinylacetale können mit anionischen, zwitterionischen, kationischen und nichtionischen Emulgatoren sowie Schutzkolloiden stabilisiert werden. Bevorzugt werden zwitterionische oder anionische Emulgatoren eingesetzt, gegebenenfalls auch in Mischungen. Als nichtionische Emulgatoren werden bevorzugt Kondensationsprodukte von Ethylenoxid oder Propylenoxid mit linearen oder verzweigten Alkoholen mit 8 bis 18 Kohlenstoffatomen, Alkylphenolen oder linearen oder verzweigten Carbonsäuren von 8 bis 18 Kohlenstoffatomen, sowie Blockcopolymere von Ethylenoxid und Propylenoxid eingesetzt. Geeignete anionische Emulgatoren sind beispielsweise Alkylsulfate, Alkylsulfonate, Alkylarylsulfate, sowie Sulfate oder Phosphate von Kondensationsprodukten des Ethylenoxides mit linearen oder verzweigten Alkylalkoholen und mit 2 bis 25 EO-Einheiten, Alkylphenolen, und Mono- oder Diester der Sulfobernsteinsäure. Geeignete zwitterionische Emulgatoren sind z.B. Alkyldimethylaminoxide, wobei die Alkylkette 6 bis 16 C-Atome besitzt. Als kationische Emulgatoren können z.B. Tetraalkylammoniumhalogenide, wie C₆-C₁₆-Alkyl-trimethylammoniumbromid verwendet werden. Ebenso können Trialkyamine mit einem längeren (> 5 C-Atome) und zwei kürzeren Kohlenwasserstoffresten (< 5 C-Atome) eingesetzt werden, die im Zuge der Acetalisierung, die unter stark sauren Bedingungen abläuft, in protonierter Form vorliegen und als Emulgator wirken können. Die Emulgatormenge beträgt 0.01 bis 20 Gew.-%, bezogen auf das Gesamtgewicht des modifizierten Polyvinylacetals in der Mutterlauge. Bevorzugt ist eine Menge von 0.01 bis 2 Gew.-% an Emulgator, besonders bevorzugt ist eine Menge von 0.01 bis 1 Gew.-% Emulgator bezogen auf das modifizierte Polyvinylacetal.

Zur Acetalisierung werden die teil- oder vollverseiften Polyvinylester vorzugsweise in wässrigem Medium aufgenommen. Üblicherweise wird ein Festgehalt der wässrigen Lösung von 5 bis 30 % eingestellt. Die Acetalisierung erfolgt in Gegenwart von sauren Katalysatoren wie Salzsäure, Schwefelsäure, Salpetersäure oder Phosphorsäure. Vorzugsweise wird durch Zugabe von 20 %-iger Salzsäure der pH-Wert der Lösung auf Werte < 1 eingestellt.

Nach Zugabe des Katalysators wird die Lösung auf vorzugsweise -10°C bis +30°C abgekühlt. Dabei gilt: Je niedriger das Molekulargewicht des eingesetzten modifizierten Polyvinylalkohols, umso geringer wird die Fälltemperatur gewählt. Die Acetalisierungsreaktion wird durch Zugabe des/der Aldehyds(e), wobei neben Amino- bzw. Ammoniumgruppen enthaltendem Aldehyd, bzw. dessen Hydrat, Halb- oder Vollacetal, mindestens ein unsubstituierter aliphatischer Aldehyd verwendet wird, gestartet. Die Zugabemenge richtet sich dabei nach dem erwünschten Acetalisierungsgrad. Da die Acetalisierung mit fast vollständigem Umsatz abläuft, kann die Zugabemenge durch einfache stöchiometrische Rechnung bestimmt werden. Da mit einer Mischung aus Amino- bzw. Ammoniumgruppen enthaltenden Aldehyd und stickstofffreiem Aldehyd gearbeitet wird, ergibt sich das Verhältnis aus dem zu erzielenden Stickstoff-Gehalt, dem gewünschtem Acetaliserungsgrad und aus dem Molekulargewicht des Amino- bzw. Ammoniumgruppen enthaltenden Aldehyds.

Die Acetalisierung wird nach Abschluß der Zugabe des Aldehyds durch Erwärmen des Ansatzes auf 20°C bis 60°C und mehrstündiges Rühren, vorzugsweise 1 bis 6 Stunden vervollständigt, und das pulverförmige Reaktionsprodukt durch Filtration und nachgeschaltetem Waschschritt isoliert. Zur Stabilisierung können ferner Alkalien zugesetzt werden. Während der Fällung und der Nachbehandlung kann mit Emulgatoren gearbeitet werden, um die wässrige Suspension des Amino- bzw. Ammoniumgruppen enthaltenden Polyvinylacetals zu stabilisieren.

In einem besonders bevorzugten Verfahren werden zunächst zu der wässrigen Lösung des Polyvinylalkohols ein oder mehrere Amino- bzw. Ammoniumgruppen enthaltende Aldehyde bzw. deren Hydrate, Halb- oder Vollacetale zugesetzt, bevorzugt oberhalb der Fälltemperatur. Mit Katalysator, beispielsweise Salzsäure, wird auf einen pH-Wert von 0 bis 5 eingestellt, so dass die Amino- bzw. Ammoniumgruppen enthaltenden Aldehyde mit dem Polyvinylalkohol vorreagieren können. Anschließend wird bei der Fälltemperatur durch Zugabe eines oder mehrerer nicht stickstoffhaltiger Aldehyde die Fällung des aminomodifizierten Polyvinylacetals vorgenommen. Zur Fällung kann gegebenenfalls weiterer Katalysator zugegeben werden. Es schließt sich das oben beschriebene Aufarbeitungsverfahren an.

Mit der erfindungsgemäßen Verfahrensweise werden aminomodifizierte Polyvinylacetale, vorzugsweise aminomodifizierte Polyvinylbutyrale zugänglich, welche gegenüber den bisher bekannten Polyvinylacetalen eine deutlich bessere Haftung auf kritischen Substraten besitzen, so dass auf die Zugabe von Haftvermittlern verzichtet werden kann.

Wie eingangs erwähnt, besteht vor allem in der Druckfarbenindustrie Bedarf an Bindemitteln mit möglichst guter Haftung auf flexiblen Folien unterschiedlicher Polymere, um damit Druckfarben zur Verfügung stellen zu können, die nach dem Applizieren sehr fest mit dem Substrat verbunden sind und damit nur sehr schwer vom bedruckten Substrat abzulösen sind. Aufgrund der hervorragenden Haftung der mit Amino- bzw. Ammoniumgruppen modifizierten Polyvinylacetale, insbesondere mit Amino- bzw. Ammoniumgruppen modifizierte Polyvinylbutyrale, der günstigen Wechselwirkungen mit Pigmenten und der sich damit auch ergebenden vorteilhaften (Druckfarben)Rheologie eignen sich diese insbesondere zur Verwendung in Druckfarbenzusammensetzungen.

Geeignete Druckfarbenformulierungen sind dem Fachmann bekannt und enthalten im allgemeinen 5 bis 25 Gew.-% Pigmentanteil, beispielsweise Disazo- oder Phthalocyanin-Pigmente, 5 bis 25 Gew.-% Polyvinylacetal-Bindemittel und Lösungsmittel, beispielsweise Alkohole wie Ethanol oder Ester wie Ethylacetat. Gegebenenfalls können noch weitere Zusatzstoffe wie Verzögerer, Weichmacher und andere Additive, wie beispielsweise Füllstoffe oder Wachse, enthalten sein. Haftvermittler sind nicht mehr zwingend erforderlich.

Die mit Amino- bzw. Ammoniumgruppen modifizierten Polyvinylacetale zeigen eine erheblich bessere Haftung als die im Stand der Technik bekannten Polyvinylacetale.

Die nachfolgenden Beispiele dienen zur weiteren Erläuterung der Erfindung, ohne diese in irgendeiner Weise einzuschränken:

### Beispiel 1:

In einem 6 Liter Glasreaktor wurden 2690 ml dest. Wasser und 1160 ml einer 20.2 %-igen wässrigen Lösung eines vollverseiften Polyvinylalkohols (Viskosität 2.5 mPas (DIN 53015); Methode nach Höppler; 4 %-ige wässrige Lösung), vorgelegt. Der gemessene pH-Wert dieser Vorlage betrug 5.4. Durch Zugabe von 10 ml 20 %-iger Salzsäure wurde ein pH-Wert von 4.2 eingestellt. Nun wurde unter Rühren auf 10°C abgekühlt und bei dieser Temperatur wurden 2.5 g Aminoacetaldehyddimethylacetal zugegeben. Das Aminoacetaldehyddimethylacetal wurde 30 min bei 10°C mit dem Polyvinylalkohol vorreagiert, wodurch eine effektive Anknüpfung stattfand. Anschließend wurde auf 2.7°C abgekühlt und es wurden 1104 ml 20 %iger Salzsäure zugegeben. Durch die Säurezugabe wurde eine Rauchentwicklung beobachtet. Die Innentemperatur stieg dabei auf 8°C an. Nach weiterem Abkühlen auf - 3.8°C wurden anschließend, innerhalb eines Zeitraumes von 5 Minuten, 151.1 g Butyraldehyd zugegeben. Die Reaktorinnentemperatur stieg dabei auf -1.2°C an. Innerhalb kürzester Zeit wurde wieder auf -2°C abgekühlt. 3 Minuten nach Zugabe des Butyraldehyds wurde der zunächst klare Ansatz milchig trüb, und bereits 5 Minuten später fiel das Produkt aus. Nach 40 Minuten Reaktionszeit bei -2°C wurde die Temperatur über einen Zeitraum von 3.5 Stunden auf 25°C erhöht und diese Temperatur für weitere 2 Stunden gehalten. Daraufhin wurde das Produkt abfiltriert und solange mit destilliertem Wasser gewaschen, bis das Filtrat neutral reagierte. Anschließend erfolgte die Trocknung bis zu einem Festgehalt von mindestens 98 %, zunächst bei 22°C, dann bei 35°C im Vakuum.
Es wurde ein mit Ammoniumgruppen modifiziertes Polyvinylbutyral mit 17.84 Gew.-% Vinylalkohol-Einheiten erhalten. Der Vinylacetat-Gehalt lag bei 1.71 Gew.-%. Der Butyral-Gehalt lag bei 79.63 Gew.-% und der Acetalgehalt, der Ammoniumgruppen trägt, belief sich auf 0.82 Gew.-%. Der Stickstoffgehalt (N-Gehalt) wurde nach Kjeldahl zu 0.084 % bestimmt. Die Viskosität (DIN 53015; Methode nach Höppler; 10 %-ige ethanolische Lösung) betrug 19.4 mPas.

### Beispiel 2:

In einem 6 Liter Glasreaktor wurden 2690 ml dest. Wasser, 1114 ml 20 %-ige HCl und 1160 ml einer 20.2 %-igen wässrigen Lösung eines vollverseiften Polyvinylalkohols (Viskosität 2.5 mPas (DIN 53015); Methode nach Höppler; 4 %-ige wässrige Lösung) vorgelegt. Die Vorlage wurde unter Rühren auf 10°C abgekühlt und anschließend mit 5 g Aminoacetaldehyd-dimethylacetal versetzt. Die Zugabe des Aminoaldehydacetals hatte eine Rauchentwicklung zur Folge. Das Aminoacetaldehyddimethylacetal wurde 30 min bei 10°C mit dem Polyvinylalkohol vorreagiert, wodurch eine effektive Anknüpfung stattfand. Nach Abkühlen auf -4.2°C wurden anschließend, innerhalb eines Zeitraumes von 5 Minuten, 148.6 g Butyraldehyd zugegeben. Die Reaktorinnentemperatur stieg dabei auf -1.7°C an. Binnen kürzester Zeit wurde wieder auf -2°C abgekühlt. 3 Minuten nach Zugabe des Butyraldehyds konnte eine Eintrübung des bis dahin klaren Ansatzes festgestellt werden und bereits 5 Minuten später fiel das Produkt aus. Nach 40 Minuten Reaktionszeit bei -2°C wurde die Temperatur über einen Zeitraum von 3.5 Stunden auf 25°C erhöht und diese Temperatur für weitere 2 Stunden gehalten. Daraufhin wurde das Produkt abfiltriert und solange mit destilliertem Wasser gewaschen, bis das Filtrat neutral reagierte. Anschließend erfolgte die Trocknung bis zu einem Festgehalt von mindestens 98 %, zunächst bei 22°C, dann bei 35°C im Vakuum.
Es wurde ein mit Ammoniumgruppen modifiziertes Polyvinylbutyral mit 18.49 Gew.-% Vinylalkohol-Einheiten erhalten. Der Vinylacetat-Gehalt lag bei 1.73 Gew.-%. Der Butyral-Gehalt lag bei 78.14 Gew.-% und der Acetalgehalt, der Ammoniumgruppen trägt, belief sich auf 1.64 Gew.-%. Der Stickstoffgehalt (N-Gehalt) wurde nach Kjeldahl zu 0.171 % bestimmt. Die Viskosität (DIN 53015; Methode nach Höppler; 10 %-ige ethanolische Lösung) betrug 19.7 mPas.

### Beispiel 3:

Es wurde analog Beispiel 2 vorgegangen mit dem Unterschied, dass die Acetalisierung mit 10 g Aminoacetaldehyd-dimethylacetal und 143.6 g Butyraldehyd durchgeführt wurde.
Es wurde ein mit Ammoniumgruppen modifiziertes Polyvinylbutyral mit 18.42 Gew.-% Vinylalkohol-Einheiten erhalten. Der Vinylacetat-Gehalt lag bei 1.73 Gew.-%. Der Butyral-Gehalt lag bei 76.52 Gew.-% und der Acetalgehalt, der Ammoniumgruppen trägt, belief sich auf 3.33 Gew.-%. Der Stickstoffgehalt (N-Gehalt) wurde nach Kjeldahl zu 0.350 % bestimmt. Die Viskosität (DIN 53015; Methode nach Höppler; 10 %-ige ethanolische Lösung) betrug 19.1 mPas.

### Beispiel 4:

Es wurde analog Beispiel 2 vorgegangen mit dem Unterschied, dass die Acetalisierung mit 20 g Aminoacetaldehyd-dimethylacetal und 133.6 g Butyraldehyd durchgeführt wurde.
Es wurde ein mit Ammoniumgruppen modifiziertes Polyvinylbutyral mit 18.33 Gew.-% Vinylalkohol-Einheiten erhalten. Der Vinylacetat-Gehalt lag bei 1.73 Gew.-%. Der Butyral-Gehalt lag bei 73.13 Gew.-% und der Gehalt an Acetal mit Ammoniumgruppen belief sich auf 6.81 Gew.-%. Der Stickstoffgehalt (N-Gehalt) wurde nach Kjeldahl zu 0.704 % bestimmt. Die Viskosität (DIN 53015; Methode nach Höppler; 10 %-ige ethanolische Lösung) betrug 18.6 mPas.

### Beispiel 5:

In einem 6 Liter Glasreaktor wurden 2617 ml dest. Wasser, 826 ml 20 %-ige HCl und 1355 ml einer 20.0 %-igen wässrigen Lösung eines vollverseiften Polyvinylalkohols (Viskosität 2.5 mPas (DIN 53015); Methode nach Höppler; 4 %-ige wässrige Lösung) vorgelegt. Die Vorlage wurde unter Rühren auf 10°C abgekühlt und anschließend mit 5 g Aminoacetaldehyddimethylacetal versetzt (Rauchentwicklung). Das Aminoacetaldehyddimethylacetal wurde 40 min bei 10°C mit dem Polyvinylalkohol vorreagiert, wodurch eine effektive Anknüpfung stattfand.
Nach weiterem Abkühlen auf die Fälltemperatur von 5°C wurden 73.6 g Acetaldehyd innerhalb von 5 min zugegeben. 20 Minuten später, bei einer Reaktorinnentemperatur von 5°C, wurden 103.5 g Butyraldehyd zugegeben. Nach ca. 15 Minuten wurde der zunächst klare Ansatz milchig trüb, und 20 Minuten später fiel das Produkt aus. Ab diesem Zeitpunkt wurde die Temperatur noch 40 Minuten beibehalten und anschließend über einen Zeitraum von 3.5 Stunden auf 25°C erhöht. Diese Temperatur wurde für 2 weitere Stunden gehalten. Daraufhin wurde das Produkt abfiltriert und solange mit destilliertem Wasser gewaschen, bis das Filtrat neutral reagierte. Anschließend erfolgte die Trocknung bis zu einem Festgehalt von mindestens 98 %, zunächst bei 22°C, dann bei 35°C im Vakuum.
Es wurde ein mit Ammoniumgruppen modifiziertes Polyvinylbutyral mit 14.81 Gew.-% Vinylalkohol-Einheiten erhalten. Der Vinylacetat-Gehalt lag bei 1.75 Gew.-%. Der Butyral-Gehalt lag bei 42.48 Gew.-%, der Acetacetalgehalt bei 39.68 % und der Gehalt an Acetal mit Ammoniumgruppen belief sich auf 1.28 Gew.-%. Der Stickstoffgehalt (N-Gehalt) wurde nach Kjeldahl zu 0.122 % bestimmt. Die Viskosität (DIN 53015; Methode nach Höppler; 10 %-ige ethanolische Lösung) betrug 20.5 mPas.

### Beispiel 6:

Es wurde analog Beispiel 5 vorgegangen mit dem Unterschied, dass die Acetalisierung mit 10 g Aminoacetaldehyd-dimethylacetal, 68.2 g Acetaldehyd und 103.5 g Butyraldehyd durchgeführt wurde.
Es wurde ein mit Ammoniumgruppen modifiziertes Polyvinylbutyral mit 17.34 Gew.-% Vinylalkohol-Einheiten erhalten. Der Vinylacetat-Gehalt lag bei 1.81 Gew.-%. Der Butyral-Gehalt lag bei 42.00 Gew.-%, der Acetacetalgehalt bei 36.32 % und der Gehalt an Acetal mit Ammoniumgruppen belief sich auf 2.53 Gew.-%. Der Stickstoffgehalt (N-Gehalt) wurde nach Kjeldahl zu 0.259 % bestimmt. Die Viskosität (DIN 53015; Methode nach Höppler; 10 %-ige ethanolische Lösung) betrug 20.4 mPas.

### Beispiel 7:

Die Synthese erfolgte analog Beispiel 2.
Im Zuge der Aufarbeitung wurde das modifizierte, pulverförmige Polyvinylbutryal aus Beispiel 2 10 %-ig in Wasser resuspendiert, mit NaOH auf pH = 12 gestellt und 10 h lang bei 30°C gerührt. Es schloß sich das weitere Aufarbeitungs-, Isolations- und Trocknungsverfahren wie in Beispiel 2 an.
Es wurde ein mit Aminogruppen modifiziertes Polyvinylbutyral mit 18.49 Gew.-% Vinylalkohol-Einheiten erhalten. Der Vinylacetat-Gehalt lag bei 1.73 Gew.-%. Der Butyral-Gehalt lag bei 78.14 Gew.-% und der Gehalt an Acetal mit Aminogruppen belief sich auf 1.64 Gew.-%. Der Stickstoffgehalt (N-Gehalt) wurde nach Kjeldahl zu 0.167 % bestimmt. Die Viskosität (DIN 53015; Methode nach Höppler; 10 %-ige ethanolische Lösung) betrug 19.8 mPas.

### Beispiel 8:

Die Synthese erfolgte analog Beispiel 3.

Im Zuge der Aufarbeitung wurde das modifizierte, pulverförmige Polyvinylbutryal aus Beispiel 3 10 %-ig in Wasser resuspendiert, mit NaOH auf pH = 12 gestellt und 24 h lang bei 30°C gerührt. Es schloß sich das weitere Aufarbeitungs-, Isolations- und Trocknungsverfahren wie in Beispiel 2 an.
Es wurde ein mit Aminogruppen modifiziertes Polyvinylbutyral mit 18.42 Gew.-% Vinylalkohol-Einheiten erhalten. Der Vinylacetat-Gehalt lag bei 1.73 Gew.-%. Der Butyral-Gehalt lag bei 76.52 Gew.-% und der Gehalt an Acetal mit Aminogruppen belief sich auf 3.33 Gew.-%. Der Stickstoffgehalt (N-Gehalt) wurde nach Kjeldahl zu 0.343 % bestimmt. Die Viskosität (DIN 53015; Methode nach Höppler; 10 %-ige ethanolische Lösung) betrug 19.2 mPas.

### Vergleichsbeispiel 9:

Ein handelsübliches Polyvinylbutyral (BN 18) der Wacker Polymer Systems mit 80.0 Gew.-% Vinylbutyral-Einheiten, 2.0 Gew.-% Vinylacetat-Einheiten und 18.0 Gew.-% Vinylalkohol-Einheiten.

### Bestimmungsmethoden:

### 1. Bestimmung der dynamischen Viskosität einer Lösung von Polyvinylbutyralen (Lösungsviskosität):

90.00 ± 0.01 g Ethanol und 10.00 ± 0.01 g modifiziertes Polyvinylbutyral wurden in einem 250 ml Erlenmeyerkolben mit Schliffstopfen eingewogen und bei 50°C in der Schüttelmaschine vollständig aufgelöst. Anschließend wurde auf 20°C abgekühlt und die dynamische Viskosität (DIN 53 015; Methode nach Höppler) bei 20°C mit einer geeigneten Kugel, z.B. der Kugel 3, bestimmt.

### 2. Bestimmung des Vinylalkohol-Gehalts:

Der Gehalt an Vinylalkohol-Gruppen in den modifizierten Polyvinylbutyralen wurde - unter Beachtung des Gehalts an Aminogruppen im Polymer (der nach Methode 3 vorher ermittelt wurde) - durch die Acetylierung der Hydroxylgruppen mit Essigsäureanhydrid in Gegenwart von Pyridin und 4-Dimethylaminopyridin ermittelt.
Dazu wurden 1 g ± 0.001 g Polyvinylacetal in 24 ml Pyridin und 0.04 g 4-Dimethylaminopyridin bei 50°C innerhalb von 2 Stunden gelöst. Die auf 25°C abgekühlte Lösung wurde mit 10 ml einer Mischung aus Pyridin und Essigsäureanhydrid (87/13 Volumenteile) versetzt und 1 Stunde intensiv durchmischt. Daraufhin wurden 30 ml einer Mischung aus Pyridin/ Wasser (5/1 Volumenteile) zugesetzt und eine weitere Stunde geschüttelt. Anschließend wurde mit methanolischer 0.5 N KOH auf pH 7 titriert.

### Berechnung :

Gew.-% Vinylalkohol = [(100 x M_{w})/2000] x (ml Blindwert - ml Probe). Mit Mw = Mittleres Molekulargewicht pro Repetiereinheit des Polymeren.

### 3. Bestimmung des Stickstoffgehalts (N-Gehalt):

Die Bestimmung erfolgte mit der bekannten Methode nach Kjeldahl. Der Stickstoffgehalt wird in Gew.-% angegeben.

### 4. Bestimmung der Viskosität der Polyvinylalkohol-Lösungen:

Die Bestimmung der Viskosität der als Edukte eingesetzten teil- oder vollverseiften Festharze erfolgte analog zur Bestimmung der dynamischen Viskosität der Polyvinylbutyrale; es wurden nur 4 %-ige wässrige Lösungen eingesetzt.

### 5. Anwendungstechnische Bestimmung der Haftung:

### Tesa-Test:

Von der zu untersuchenden Probe (z.B. modifiziertes Polyvinylbutyral) wird auf einer (evtl. vorher mit Isopropanol gereinigten) Folie (ggf. Corona-vorbehandelt) ein blasenfreier Film gezogen und getrocknet. Das Polyvinylbutyral wird dazu in Ethanol gelöst, wobei sich die Konzentration jeweils nach der Viskosität der Lösung richtet. Für die Prüfung wird der Tesa-film 4105 der Beiersdorf AG mit einer Breite von 15 mm verwendet. Um die Haftfestigkeit zu prüfen, wird auf die getrocknete und mindestens 16 h bei Raumtemperatur gelagerte Folie ein ca. 13 cm langer Streifen aufgeklebt. Durch ein standardisiertes, gleichmäßiges, kräftiges Darüberstreichen mit dem Finger, wobei ein Ende des Tesa-Films festgehalten wird, um eine Abzugslasche zu erhalten, wird der Andruck fixiert. Die zu prüfende Folie sollte sich dabei auf einer harten Unterlage befinden. Der Tesa-Film wird nun an der Lasche in einem Winkel von 45° ruckartig abgezogen. Die getestete Stelle wird daraufhin untersucht, ob und wieviel des Films sich vom Bedruckstoff gelöst hat und am Tesa-Film haftet. Die Prüfung wird an mehreren Stellen, unter gleichen Bedingungen, durchgeführt. Die Benotung erfolgt in Notenstufen von 1 bis 4, wobei 1 die beste, 4 die schlechteste Bewertung ist.
Die Beurteilung im Einzelnen:
1 = sehr gute Haftung (keine abgelösten Stellen)
2 = an vereinzelten Stellen hat sich die Beschichtung abgelöst
3 = an mehreren Stellen hat sich die Beschichtung abgelöst
4 = keine Haftung der Beschichtung (vollständig abgelöst)

### Anwendungstechnische Ergebnisse:

Zur Untersuchung der Haftung wurde der Tesa-Test mit der als kritisches Substrat bezüglich Haftung von Polyvinylbutyral geltenden Folie OPP Mobil MB 400 (Polypropylen-Folie, Coronavorbehandlung mit 600 W) durchgeführt.

Die Ergebnisse der Messungen der Haftung der Produkte aus den Beispielen bzw. dem Vergleichsbeispiel sind Tabelle 1 zu entnehmen.

**Tabelle 1:**

| Bsp. | Stickstoffgehalt in % | Modifizierung | Tesa-Test auf OPP MB 400, coronabehandelt |
|---|---|---|---|
| 1 | 0.084 | Ammoniumgruppe | 2 |
| 2 | 0.171 | Ammoniumgruppe | 1 |
| 3 | 0.350 | Ammoniumgruppe | 1 |
| 4 | 0.704 | Ammoniumgruppe | 1 |
| 5 | 0.122 | Ammoniumgruppe | 1 |
| 6 | 0.259 | Ammoniumgruppe | 1 |
| 7 | 0.167 | Aminogruppe | 1 |
| 8 | 0.343 | Aminogruppe | 1 |
| V9 | 0.000 | keine | 4 |

Wie aus Tabelle 1 ersichtlich ist, zeigen herkömmliche, nicht modifizierte Polyvinylbutyrale auf diesem bezüglich Haftung sehr kritischen Substrat nur eine ungenügende Haftung (Vergleichsbeispiel 9). Schon mit einer geringen Modifizierung des Polyvinylbutyrals mit Ammonium- bzw. Aminogruppen gelingt es, die Haftung deutlich zu verbessern, und ein exzellenter Wert kann erzielt werden (Beispiele 1 bis 8).

## Patentansprüche

1. Verwendung von mit Amino- oder Ammoniumgruppen modifizierten Polyvinylacetalen mit einer Viskosität von 4 mPas bis 1200 mPas (DIN 53015; Methode nach Höppler, 10 %-ige Lösung in Ethanol), erhältlich durch Acetalisierung von teilverseiften oder vollverseiften Vinylester-Polymerisaten mit ≥ 50 Mol-% Vinylalkohol-Einheiten und einer Viskosität von 1 bis 40 mPas (DIN 53015, Methode nach Höppler; 4 %-ige Lösung in Wasser) mit einem oder mehreren aliphatischen Aldehyden ausgewählt aus der Gruppe umfassend Aldehyde mit 1 bis 15 C-Atomen sowie deren Halbacetale und Vollacetale, und mindestens einem Amino- oder Ammoniumgruppen enthaltenden Aldehyd oder dessen Hydrat, Halbacetal oder Vollacetal, in Druckfarbenzusammensetzungen.

2. Verwendung nach Anspruch 1, **dadurch gekennzeichnet, dass** als Amino- oder Ammoniumgruppen enthaltende Aldehyde sowie deren Hydrate, Halbacetale oder Vollacetale, solche mit den Summenformeln
I) (R)₂N - (CH₂)ₙ - CH(OR)₂,
II) (R)₂N - (CH₂)ₙ - CH=O,
III) X⁻ (R)₃N⁺ - (CH₂)ₙ - CH(OR)₂,
IV) X⁻ (R)₃N⁺ - (CH₂)ₙ - CH=O,
eingesetzt werden, wobei jeweils R gleich oder verschieden ist und die Bedeutung H-Atom haben kann und für einen unverzweigten oder verzweigten, gesättigten oder ungesättigten, gegebenenfalls substituierten Alkylrest mit 1 bis 12 C-Atomen steht, X⁻ für ein Anion steht, und n für eine Zahl von 0 bis 40 steht.

3. Verwendung nach Anspruch 1 oder 2, **dadurch gekennzeichnet, dass** ein oder mehrere Verbindungen eingesetzt werden, aus der Gruppe umfassend Formamid, Aminoacetaldehyddimethylacetal, Aminoacetaldehyddiethylacetal, Aminopropionaldehyddimethylacetal, Aminopropionaldehyddiethylacetal, Aminobutyraldehyddimethylacetal, Aminobutyraldehyddiethylacetal sowie jeweils deren kationischen Ammoniumsalze.

4. Verwendung nach Anspruch 1, **dadurch gekennzeichnet, dass** als aliphatische Aldehyde Butyraldehyd oder eine Mischung aus Butyraldehyd und Acetaldehyd eingesetzt werden.

5. Verwendung nach Anspruch 1 bis 4, **dadurch gekennzeichnet, dass** der Acetalisierungsgrad 1 bis 80 Mol-% beträgt.

6. Verwendung nach Anspruch 1 bis 5, **dadurch gekennzeichnet, dass** die Amino- oder Ammoniumgruppen enthaltenden Aldehyde sowie deren Hydrate, Halbacetale oder Vollacetale in einer solchen Menge eingesetzt werden, dass der Gehalt an Amino- und Ammonium-Acetaleinheiten bezogen auf den Gesamtgehalt an Acetaleinheiten 0.001 bis 95 % beträgt, bezogen auf den Gesamtgehalt an Acetaleinheiten in Mol-%.

## Claims

1. Use of polyvinyl acetals modified with amino or ammonium groups and having a viscosity of 4 mPas to 1200 mPas (DIN 53015; Höppler method, 10% strength solution in ethanol), obtainable by acetalizing fully or partly hydrolyzed vinyl ester polymers containing ≥ 50 mol% of vinyl alcohol units and having a viscosity of 1 to 40 mPas (DIN 53015, Höppler method; 4% strength solution in water) with one or more aliphatic aldehydes selected from the group consisting of aldehydes having 1 to 15 carbon atoms, and the acetals and hemiacetals thereof, and with at least one aldehyde containing amino or ammonium groups, or its hydrate, acetal or hemiacetal, in printing ink compositions.

2. Use according to Claim 1, **characterized in that** as aldehydes containing amino or ammonium groups and also their hydrates, acetals or hemiacetals use is made of those having the empirical formulae
I) (R)₂N-(CH₂)ₙ-CH(OR)₂,
II) (R)₂N-(CH₂)ₙ-CH=O,
III) X⁻(R)₃N⁺-(CH₂)ₙ-CH(OR)₂,
IV) X⁻(R)₃N⁺-(CH₂)ₙ-CH=O,
in each of which R is identical or different and can have the definition of hydrogen atom and is a branched or unbranched, saturated or unsaturated, unsubstituted or substituted alkyl radical having 1 to 12 carbon atoms, X⁻ is an anion, and n is a number from 0 to 40.

3. Use according to Claim 1 or 2, **characterized in that** one or more compounds are used from the group consisting of formamide, aminoacetaldehyde dimethyl acetal, aminoacetaldehyde diethyl acetal, aminopropionaldehyde dimethyl acetal, aminopropionaldehyde diethyl acetal, aminobutyraldehyde dimethyl acetal, aminobutyraldehyde diethyl acetal and in each case their cationic ammonium salts.

4. Use according to Claim 1, **characterized in that** butyraldehyde or a mixture of butyraldehyde and acetaldehyde is used as aliphatic aldehyde.

5. Use according to Claim 1 to 4, **characterized in that** the degree of acetalization is 1 mol% to 80 mol%.

6. Use according to Claim 1 to 5, **characterized in that** the aldehydes containing amino or ammonium groups and their hydrates, acetals or hemiacetals are used in an amount such that the amount of amino- and ammonium-acetal units, relative to the total amount of acetal units, is 0.001% to 95%, based on the total amount of acetal units in mol%.

## Revendications

1. Utilisation de polyvinylacétals modifiés avec des groupes amino ou ammonium avec une viscosité comprise entre 4 mPas et 1200 mPas (DIN 53015 ; méthode selon Höppler, solution à 10 % dans de l'éthanol), qui peuvent être obtenus par acétalisation de polymères d'ester de vinyle partiellement saponifiés ou totalement saponifiés avec des unités d'alcool vinylique ≥ 50 % mol et une viscosité de 1 à 40 mPas (DIN 53015, méthode selon Höppler ; solution à 4 % dans de l'eau) avec un ou plusieurs aldéhydes aliphatiques sélectionnés dans le groupe comprenant des aldéhydes avec 1 à 15 atomes de carbone, ainsi que leurs demi-acétals et acétals entiers, et au moins un aldéhyde contenant des groupes amino ou ammonium ou son hydrate, demi-acétal ou acétal entier, dans des compositions d'encres d'impression.

2. Utilisation suivant la revendication 1, **caractérisée en ce que** les aldéhydes contenant des groupes amino ou ammonium, de même que leurs hydrates, demi-acétals ou acétals entiers, sont mis en oeuvre avec les formules brutes ci-après :
I) (R)₂N - (CH₂)ₙ - CH (OR)₂,
II) (R)₂N - (CH₂)ₙ - CH=O,
III) X⁻ (R)₃N⁺ - (CH₂)ₙ - CH (OR)₂,
IV) X⁻ (R)₃N⁺ - (CH₂)ₙ - CH=O,
où R est identique ou différent dans chaque cas et peut avoir la signification d'un atome d'hydrogène et représente un radical alkyle non ramifié ou ramifié, saturé ou insaturé, le cas échéant substitué avec 1 à 12 atomes de carbone, X⁻ représente un anion et n représente un nombre compris entre 0 et 40.

3. Utilisation suivant la revendication 1 ou 2, **caractérisée en ce que** l'on met en oeuvre un ou plusieurs composés, à partir du groupe comprenant les éléments suivants :
formamide, aminoacétaldehyddiméthylacétal, aminoacétaldéhyddiéthylacétal, aminopropionaldéhyddiméthylacétal, aminopropionaldéhyddiéthylacétal, aminobutyraldéhyddiméthylacétal, aminobutyraldéhyddiéthylacétal de même que leurs sels d'ammonium cationiques.

4. Utilisation suivant la revendication 1, **caractérisée en ce que** l'on met en oeuvre comme aldéhydes aliphatiques du butyraldéhyde ou un mélange de butyraldéhyde et d'acétaldéhyde.

5. Utilisation suivant la revendication 1 à 4, **caractérisée en ce que** le degré d'acétalisation est compris entre 1 et 80 % mol.

6. Utilisation suivant les revendications 1 à 5 **caractérisée en ce que** les aldéhydes contenant des groupes amino ou ammonium, ainsi que leurs hydrates, demi-acétals ou acétals entiers sont mis en oeuvre dans une quantité telle que la teneur en unités d'aminoacétal et d'ammoniumacétal par rapport à la teneur totale en unités d'acétal est comprise entre 0,001 et 95 %, par rapport à la teneur totale en unités d'acétal en % mol.
